# EUROPEAN PATENT SPECIFICATION

(11) **EP 4 050 806 B1**
(45) Date of publication and mention of the grant of the patent: **06.11.2024**
(21) Application number: 20879198.8
(22) Date of filing: 29.09.2020
(51) Int. Cl.: H04B 5/00, A47J 27/21, A47J 31/52, A47J 36/32, H04B 5/24, H04B 5/72, H04B 5/79, A47J 37/08

(54) **SMALL HOME APPLIANCE, AND METHOD FOR PERFORMING COMMUNICATION IN SMALL HOME APPLIANCE**
KLEINES HAUSHALTSGERÄT UND VERFAHREN ZUR KOMMUNIKATION IN EINEM KLEINEN HAUSHALTSGERÄT
PETIT APPAREIL DOMESTIQUE ET PROCÉDÉ POUR RÉALISER UNE COMMUNICATION DANS UN PETIT APPAREIL DOMESTIQUE

(30) Priority: 23.10.2019 KR 20190132243
(43) Date of publication of application: 31.08.2022
(73) Proprietor: LG Electronics Inc., Seoul 07336 (KR)
(72) Inventor: KIM, Gwang Rok, Seoul 08592 (KR)
(74) Representative: Ter Meer Steinmeister & Partner
(86) International application number: PCT/KR2020/013399
(87) International publication number: WO 2021/080208

(56) References cited:
- KR-A- 20120 090 220
- KR-A- 20140 014 647
- KR-A- 20150 031 852
- KR-A- 20180 012 962
- US-A1- 2016 336 783
- US-B2- 10 090 884
- US-B2- 10 263 470
- US-B2- 10 340 738

## Description

### Technical Field

The present disclosure relates to a small home appliance and a method for performing communication with the small home appliance.

### Background Art

Recently, electronic products using a wireless power transfer (WPT) technology have been developed. Wireless power transfer technology is a technology for wirelessly transferring power between a power source and an electronic device. As an example, wireless power transfer technology allows you to charge the battery of a wireless terminal, such as a smartphone or tablet, by simply placing the wireless terminal on a wireless charging pad, thereby providing greater mobility, convenience, and safety compared to a wired charging environment in which an existing wired charging connector is used. Wireless power transfer technology is expected to replace an existing wired power transmission environment in various fields such as electric vehicles, various wearable devices such as Bluetooth earphones and 3D glasses, home appliances, furniture, underground facilities, buildings, medical devices, robots, and leisure.

A wireless power transfer method is referred to as a contactless power transfer method, a power transfer method having no point of contact, or a wireless charging method. A wireless power transfer system may be composed of a wireless power transmitter for supplying electric energy in the wireless power transfer method, and a wireless power receiver for receiving electric energy wirelessly supplied from the wireless power transmitter and supplying power to a power receiving device such as a battery cell.

Wireless power transfer technology includes various methods such as a method of transferring power through magnetic coupling, a method of transferring power through radio frequency (RF), a method of transferring power through microwaves, and a method of transferring power through ultrasonic waves.

Such a wireless power transfer technology is being applied to a small electric appliance in addition to wireless charging of a wireless terminal.

A wireless power technology is mainly divided into two categories such as a short distance and a long distance. In a short distance or non-radiative technology, power is generally transmitted over a short distance by a magnetic field using inductive coupling between coils of wire. Inductive coupling is the most widely used wireless technology.

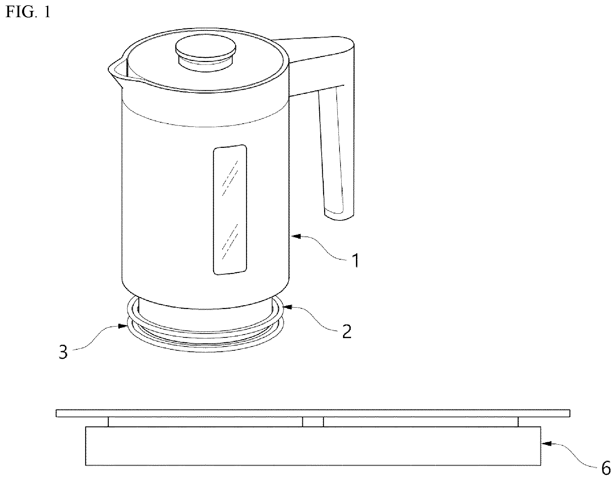

FIG. 1 is a view illustrating an example of a small home appliance employing a conventional wireless power transfer technology.

Referring to FIG. 1, an electric kettle is illustrated as the small home appliance.

Since the electric kettle 1 employs the wireless power transfer technology, the electric kettle is required to wirelessly receive power. To this end, the electric kettle 1 includes an antenna coil 2 for communication, and a coil 3 for power reception. The antenna coil 2 for communication and the coil 3 for power reception may be located close to each other due to the small internal area of the small home appliance. The coil 3 for power reception may receive power, and the antenna coil 2 for communication may, for example, be an antenna for a near field communication. The electric kettle 1 may perform near field communication with a wireless power transmission device 6 by using the antenna coil 2 for communication.

However, the magnitude of voltage induced in the antenna coil 2 for communication may be greater than the magnitude of voltage induced in the coil 3 for power reception. Accordingly, since the antenna coil 2 for communication and the coil 3 for power reception are located close to each other in the small space of the small home appliance, magnetic field interference occurs in the antenna coil 2 for communication due to the coil 3 for power reception, so communication performance deteriorates.

An example of the prior art is disclosed in the patent application published under the following number: US 10 090 884 B2. US 10 090 884 B2 discloses a small home appliance comprising a coil for power reception and communication; a communication unit which performs wireless communication with a wireless power transmission device by using the coil; and a controller which receives wireless power from the wireless power transmission device by using the coil, receives a zero crossing interrupt signal related to the wireless power from the wireless power transmission, and determines a communication period for communication by using the coil according to the zero crossing interrupt signal, wherein the small home appliance is one of an electric kettle, a blender, and a toaster.

### Disclosure

### Technical Problem

The present disclosure is intended to propose a small home appliance in which the problem of communication performance deterioration due to interference between a coil for power reception and a coil for communication in a conventional small home appliance is solved.

The present disclosure is intended to propose a small home appliance in which the space issue of the small home appliance can be solved.

The present disclosure is intended to propose a small home appliance and a method for performing communication with the small home appliance in which both power reception and communication can be performed by using one coil.

The objectives of the present disclosure are not limited to the objectives mentioned above, and, other objectives not mentioned will be clearly understood by those skilled in the art to which the present disclosure belongs from the following description.

### Technical Solution

According to the present invention, a small home appliance as defined in claim 1 is disclosed.

The controller may generate a communication control signal according to the zero crossing interrupt signal and transmit the communication control signal to the communication unit, and the communication unit may operate according to the communication control signal.

The wireless power transmission device may include a coil for power transmission which generates a time-varying electromagnetic field due to commercial power, a zero crossing detector which outputs a detected signal by detecting zero crossing of the commercial power, and another controller which generates the zero crossing interrupt signal on the basis of the detected signal.

The wireless power transmission device may further include: an antenna for communication, and another communication unit which communicates with the communication unit through the antenna for communication.

The zero crossing interrupt signal may have a period of 8.3ms.

The zero crossing interrupt signal may have a pulse width of 2ms.

The small electric appliance is one of an electric kettle, a blender, and a toaster.

The small home appliance may be the electric kettle, and the coil for power reception and communication may be disposed on the lower part of the electric kettle.

According to the present invention, a method for performing communication between the small home appliance and the wireless power transmission device according to claim 11 is disclosed.

The step of determining the communication period may include: a step at which the small home appliance generates the communication control signal according to the zero crossing interrupt signal; a step at which the small home appliance transmits the communication control signal to the communication unit of the small home appliance; and a step at which the communication unit of the small home appliance operates according to the communication control signal.

The method for performing communication may further include: a step at which zero crossing of commercial power is detected when the wireless power transmission device transmits wireless power by using the commercial power, and a step at which the wireless power transmission device generates the zero crossing interrupt signal according to the detected zero crossing.

### Advantageous Effects

According to the embodiment of the present disclosure, one coil is used for power and antenna, thereby solving the conventional problem of communication performance deterioration due to interference between two coils.

According to the embodiment of the present disclosure, coil mounting space is reduced, thereby improving the beauty of the small home appliance and miniaturizing the small home appliance.

### Description of Drawings

FIG. 1 is a view illustrating an example of a small home appliance to which a conventional wireless power transfer system is applied.
FIG. 2 is a perspective view of an example of an electronic device employing a wireless power transfer system according to an embodiment of the present disclosure.
FIG. 3 is a block diagram of a small home appliance according to the embodiment of the present disclosure.
FIG. 4 illustrates a zero crossing interrupt signal according to the embodiment of the present disclosure.
FIG. 5 illustrates a flowchart of a method of performing communication between the small home appliance and a wireless power transmission device according to the embodiment of the present disclosure.
FIG. 6 is a sectional view of an electric kettle which is an example of the small home appliance according to the embodiment of the present disclosure.
FIG. 7 is a sectional perspective view of the electric kettle of FIG. 6.
FIG. 8 is a sectional perspective view of the lower part of the electric kettle of FIG. 6.

### Mode for Invention

Hereinbelow, detailed embodiments of the present disclosure will be described in detail with reference to the accompanying drawings.

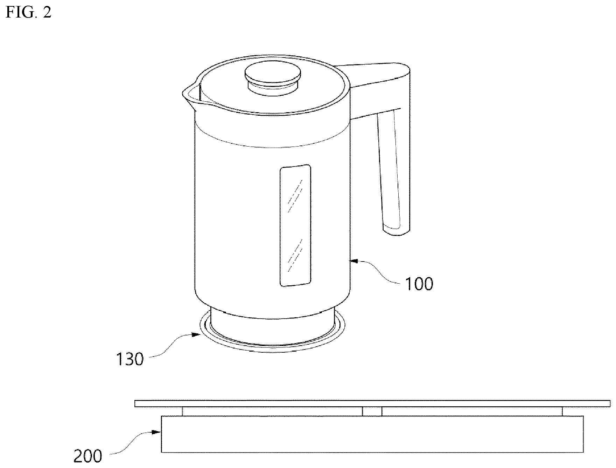

FIG. 2 is a perspective view of an example of an electronic device employing a wireless power transfer system according to an embodiment of the present disclosure.

As an example of an electronic device, an electric kettle 100 is illustrated.

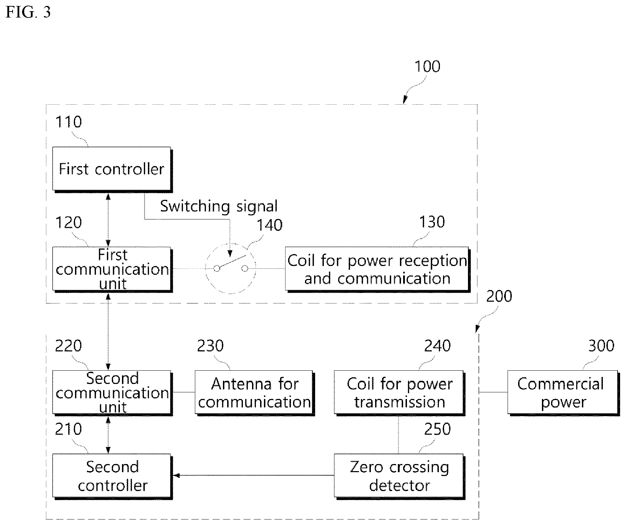

The electric kettle 100 may wirelessly receive power from a wireless power transmission device 200. A coil 130 for power reception and communication (see FIG. 3) of the electric kettle 100 may receive power from the wireless power transmission device 200 according to an electromagnetic induction method. The electromagnetic induction method is a method using an induction phenomenon between the primary and secondary coils of a transformer, and uses a frequency of several MHz. A transmission distance of the electromagnetic induction method is several mm or less, and a transmission efficiency thereof is about 90% when the transmission distance is less than 1mm.

In this case, when the electric kettle 100 is disposed close to the wireless power transmission device 200 within a predetermined distance, a current is applied to the coil of the wireless power transmission device 200 to form a magnetic field due to the flow of the current.

When the electric kettle 100 is located in the range of the magnetic field of the wireless power transmission device 200, a current is induced in the coil of the electric kettle 100. Accordingly, the electric kettle 100 may obtain AC power and convert the AC power into DC power such that the DC power can be supplied to components of the electric kettle 100.

FIG. 3 is a block diagram of a small home appliance according to the embodiment of the present disclosure.

The small home appliance 100 may include the electric kettle, a blender, and a toaster. Furthermore, the small home appliance 100 may wirelessly receive power from the wireless power transmission device 200.

The small home appliance 100 according to the embodiment of the present disclosure may include a first controller 110, a first communication unit 120, and the coil 130 for power reception and communication.

The small home appliance 100 may receive wireless power and may perform communication by using the coil 130 for power reception and communication. That is, the small home appliance 100 may perform both the reception of the wireless power and communication by using one coil.

Specifically, the first communication unit 120 may perform NFC communication by using the coil 130 for power reception and communication. Additionally, the first controller 110 may use voltage induced through the coil 130 for power reception and communication as power.

The first controller 110 may use the coil 130 for power reception and communication for communication according to a predetermined period. That is, the first controller 110 may determine a communication period by the coil 130. That is, the first controller 110 may use the coil 130 for communication in a time period in which wireless power is not received through the coil 130.

To this end, the first controller 110 may receive a zero crossing interrupt signal related to the wireless power from the wireless power transmission device 200, and may determine a communication period by using the coil according to the zero crossing interrupt signal.

The wireless power transmission device 200 may include a second controller 210, a second communication unit 220, an antenna 230 for communication, a coil 240 for power transmission, and a zero crossing detector 250.

Since the wireless power transmission device 200 does not have restriction of small space like the small home appliance 100, the wireless power transmission device 200 may include the antenna 230 for communication and the coil 240 for power transmission. Accordingly, the second communication unit 220 may use the antenna 230 for communication exclusively for communication. Furthermore, the second controller 210 may use the coil 240 for power transmission exclusively for power transmission.

The coil 240 for power transmission may generate a time-varying electromagnetic field due to commercial power 300. The commercial power 300 is AC power and thus has a zero crossing point. That is, commercial power is 220AC 60Hz in Korea and has 120 voltage zero crossing points.

Accordingly, the electromagnetic field generated due to the commercial power 300 may also have a zero crossing point. That is, in the zero crossing point of the time-varying electromagnetic field, wireless power may not be transmitted to the small home appliance 100.

The zero crossing detector 250 may detect the zero crossing point of the commercial power and may provide or output a detected signal to the second controller 210. The zero crossing detector 250 is not a necessary component of the small home appliance of the present disclosure, and may be included in the small home appliance 100 which is a wireless power reception device. The second controller 210 may generate a zero crossing interrupt signal on the basis of the detected signal output from the zero crossing detector 250.

Meanwhile, since the commercial power 300 has a known frequency, the second controller 210 knows in advance the period of the commercial power. Accordingly, the second controller 210 may generate a zero crossing interrupt signal according to of the known period of the commercial power.

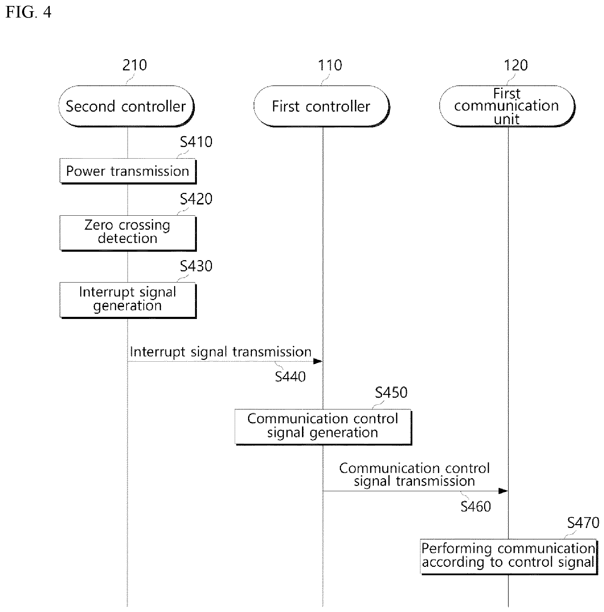

FIG. 4 illustrates a zero crossing interrupt signal according to the embodiment of the present disclosure. Referring to FIG. 4, the zero crossing interrupt signal may be generated on the basis of the zero crossing of wireless power (WPT power in FIG. 4). As described above, the zero crossing of commercial power or wireless power may be known in advance by the second controller 210 of the wireless power transmission device 200 or may be detected by the zero crossing detector 250. For example, the zero crossing detector 250 may detect a sine waveform transition from positive and negative sections of wireless power.

The zero crossing interrupt signal may be generated based on the zero crossing of commercial power. As illustrated in FIG. 4, the zero crossing interrupt signal may be a square wave signal having a period of 8.3ms. Furthermore, the zero crossing interrupt signal may have a pulse width of 2ms. The pulse width of the zero crossing interrupt signal may correspond to the negative section of wireless power. It is clear that embodiments of the present disclosure are not limited thereto.

The zero crossing interrupt signal may have a pulse width corresponding to the negative section of wireless power. In the negative section of wireless power, the coil 130 for power reception and communication of the small home appliance may be used for short distance communication (for example, NFC communication).

Referring back to FIG. 4, the second controller 210 of the wireless power transmission device 200 may transmit a zero crossing interrupt signal to the small home appliance 100 through the second communication unit 220 on the basis of the zero crossing of wireless power.

When the first controller 110 of the small home appliance 100 receives the zero crossing interrupt signal through the first communication unit 120, the first controller 110 may determine a communication period by using the coil 130 according to the zero crossing interrupt signal.

The first controller 110 of the small home appliance 100 may allow the first communication unit 120 to perform communication according to the determined communication period.

According to the embodiment, the small home appliance 100 may further include a switch 140 located between the coil 130 for power reception and communication and the first communication unit 120. In this case, the first controller 110 may control the switch 140 according to the zero crossing interrupt signal.

Specifically, the first controller 110 may control the switch 140 according to the pulse of the zero crossing interrupt signal and may connect the coil 130 with the first communication unit 120. For example, the first controller 110 may control the switch 140 by providing a switching signal to the switch 140. When the first communication unit 120 is connected with the coil 130 through the switch 140, the first communication unit 120 may transmit an NFC signal to the wireless power transmission device 200.

According to another embodiment, when the first controller 110 of the small home appliance 100 receives the zero crossing interrupt signal from the wireless power transmission device 200, the first controller 110 may generate a communication control signal. In this case, the communication control signal may be a signal indicating a communication period. After generating the communication control signal, the first controller 110 of the small home appliance 100 may transmit the communication control signal to the first communication unit 120. When the first communication unit 120 receives the communication control signal from the first controller 110, the first communication unit 120 may perform communication according to the communication control signal.

The small home appliance 100 may be an electric kettle, and the coil 130 for power reception and communication may be disposed on a lower part of the electric kettle 100.

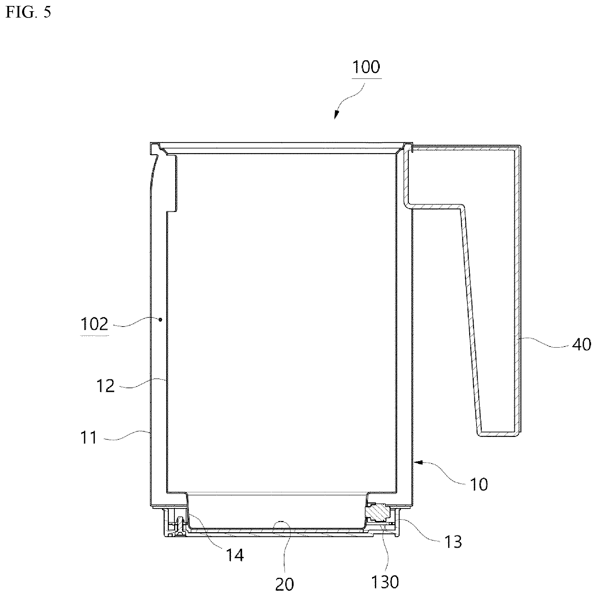

FIG. 5 illustrates a flowchart of the method of performing communication between the small home appliance and the wireless power transmission device according to the embodiment of the present disclosure.

Referring to FIG. 5, the second controller 210 of the wireless power transmission device 200 may transmit wireless power to the small home appliance 100. The wireless power transmission device 200 may transmit wireless power by using a coil for wireless power transmission (S410). When the second controller 210 of the wireless power transmission device 200 transmits wireless power, the second controller 210 may detect the zero crossing of wireless power (S420). The second controller 210 of the wireless power transmission device 200 may generate a zero crossing interrupt signal on the basis of the detected zero crossing of wireless power (S430).

After generating the zero crossing interrupt signal, the second controller 210 of the wireless power transmission device 200 may transmit the zero crossing interrupt signal to the small home appliance 100 (S440).

After receiving the zero crossing interrupt signal from the wireless power transmission device 200, the first controller 110 of the small home appliance 100 may generate the communication control signal (S450). In this case, the communication control signal may be a signal indicating a communication period. After generating the communication control signal, the first controller 110 of the small home appliance 100 may transmit the communication control signal to the first communication unit 120 (S460). When receiving the communication control signal from the first controller 110, the first communication unit 120 may perform communication according to the communication control signal.

According to the another embodiment, the first controller 110 of the small home appliance 100 may control the switch 140 disposed between the first communication unit 120 and the coil 130 for power reception and communication according to the zero crossing interrupt signal. Specifically, the first controller 110 may control the switch 140 by corresponding to the pulse of the zero crossing interrupt signal and may connect the coil 130 with the first communication unit 120. When the first communication unit 120 is connected with the coil 130 through the switch 140, the first communication unit 120 may transmit an NFC signal to the wireless power transmission device 200.

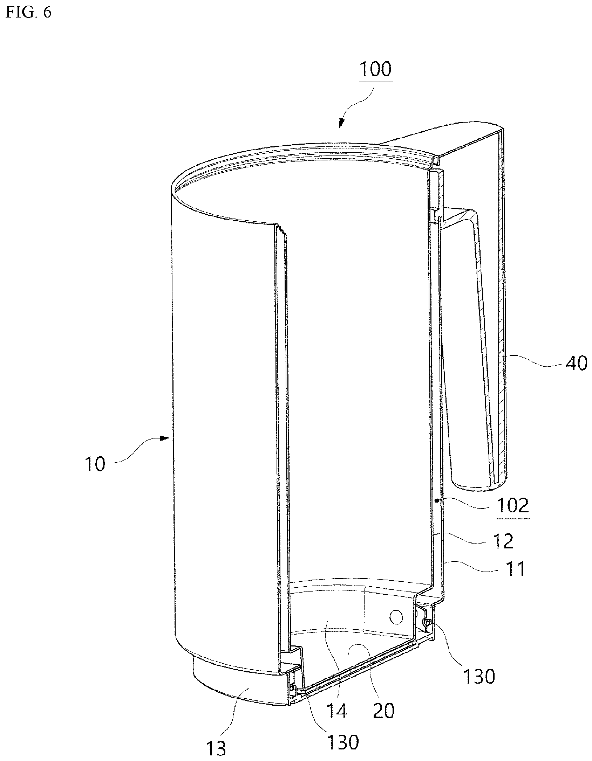

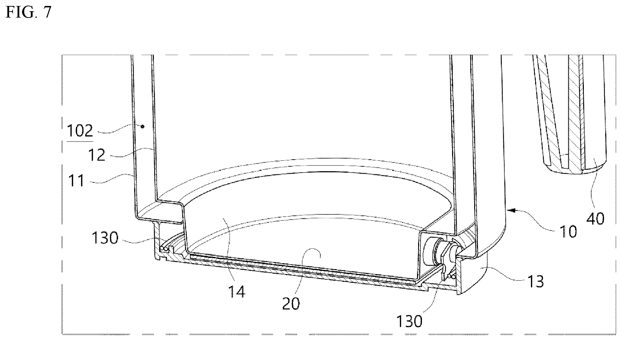

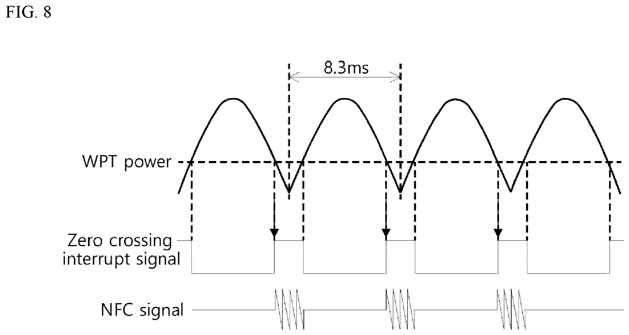

FIG. 6 is a sectional view of an electric kettle which is an example of the small home appliance according to the embodiment of the present disclosure. FIG. 7 is a sectional perspective view of the electric kettle of FIG. 6, and FIG. 8 is a sectional perspective view of the lower part of the electric kettle of FIG. 6.

Referring to FIGS. 6 to 8, the electric kettle 100 may include a body 10. The body 10 may be configured to have a cylindrical shape. A heater (not shown) may be installed on the lower surface 20 of the body 10. The heater may receive power supplied from the electric kettle 100 and may generate heat. A handle 40 may be formed on a side of the body 10 by protruding therefrom.

Contents such as water may be received in the body 10, and the lower surface 20 of the body 10 may be heated by the heater.

The body 10 may include an inner body 12 and an outer body 11 and may have space defined between the inner body 12 and the outer body 11, so the body 10 may have a structure having a significantly improved insulation performance compared to a single-wall structure.

Both the inner body 12 and the outer body 11 may be formed of the same stainless materials, wherein the outer body 11 may constitute the exterior of the body 10, and the inner body 12 may define the space in which water is received. The inner body 12 may have a diameter smaller than the diameter of the outer body 11, and accordingly, the inner body 12 may be provided to be received in the outer body 11. Accordingly, the space 102 may be defined between the outer body 11 and the inner body 12.

An air layer may be formed in the space 102 defined between the outer body 11 and the inner body 12, so heat may be prevented from being directly transferred to the outer body 11. Accordingly, the space 102 may be referred to as insulation space 102. Additionally, even in a state in which water received in the inner body 12 is heated to be hot, the outer body 11 may maintain a relatively low temperature.

The body 10 may be formed in such a manner that the upper and lower ends of the outer body 11 and the inner body 12 formed in cylindrical shapes are coupled to each other. For example, the upper and lower ends of the outer body 11 and the inner body 12 may be connected to each other by welding while superimposed on each other. In this case, except for the upper and lower ends of the outer body 11 and the inner body 12, remaining portions thereof may be spaced apart by a predetermined interval from each other to have an insulating structure.

The structure of the upper end of the body 10 will be described in more detail. A outer lower end part 13 may be formed on the lower end of the outer body 11. The outer lower end part 13 may extend downward to form the lower end of the outer body 11, and may be formed in a shape stepped inward.

An inner lower end part 14 may be formed on the lower end of the inner body 12. The inner lower end part 14 may be formed by extending downward to form the lower end of the inner body 12. Furthermore, the inner lower end part 14 may be in surface contact with the outer lower end part 13. In a state in which the outer lower end part 13 and the inner lower end part 14 are coupled to each other, the coil 130 for power reception and communication of the electric kettle 100 may be installed in space between the outer lower end part 13 and the inner lower end part 14.

As described above, as a distance between the coil 130 of the electric kettle 100 and the coil of the wireless power transmission device 200 decreases, power transmission efficiency therebetween increases. Accordingly, when the coil 130 of the electric kettle 100 is placed on the wireless power transmission device 200, the coil 130 may be disposed in the space between the outer lower end part 13 and the inner lower end part 14 close to the coil of the wireless power transmission device 200.

In addition, a humidity sensor 110 may be installed in the space between the outer lower end part 13 and the inner lower end part 14. The humidity sensor 110 may be installed to be exposed to space of the body 10 in which water is received. Specifically, the humidity sensor 110 may be installed on a side portion of the inner lower end part 14 such that the humidity sensor 110 is exposed to the space of the body 10 in which water is received. Accordingly, the humidity sensor 110 may measure the humidity of the space of the body 10 in which water is received.

Hereinafter, in the electric kettle configured as described above, a component for determining whether contents are present the space of the body and an operation method thereof on the basis of humidity measured by the humidity sensor will be described.

## Claims

1. A small home appliance (100) comprising:
a coil for power reception and communication; a communication unit (120) which performs wireless communication with a wireless power transmission device (200) by using the coil; a switch (140) located between the coil and the communication unit (120); and a controller (110) which receives wireless power from the wireless power transmission device (200) by using the coil, receives a zero crossing interrupt signal related to the wireless power from the wireless power transmission device (200), controls the switch (140) according to the zero crossing interrupt signal, and determines a communication period for communication by using the coil according to the zero crossing interrupt signal,
wherein the small home appliance (100) is one of an electric kettle, a blender, and a toaster.

2. The small home appliance (100) of claim 1, **characterized in that** the controller (110) generates a communication control signal according to the zero crossing interrupt signal and transmits the communication control signal to the communication unit (120), and the communication unit (120) operates according to the communication control signal.

3. The small home appliance (100) of claim 1, **characterized in that** the wireless power transmission device (200) comprises: a coil for power transmission which generates a time-varying electromagnetic field due to commercial power, and another controller (210) which generates the zero crossing interrupt signal on the basis of a detected signal.

4. The small home appliance (100) of claim 3, **characterized in that** the wireless power transmission device (200) further comprises: an antenna for communication, and another communication unit (220) which communicates with the communication unit (120) through the antenna for communication.

5. The small home appliance (100) of claim 4, **characterized in that** the wireless power transmission device (200) further comprises: a zero crossing detector (250) which outputs the detected signal by detecting zero crossing of the commercial power.

6. The small home appliance (100) of claim 1, **characterized in that** the zero crossing interrupt signal is a square wave signal having a period of 8.3ms.

7. The small home appliance (100) of claim 6, **characterized in that** the zero crossing interrupt signal has a pulse width of 2ms.

8. A method for performing communication between a small home appliance (100) comprising a coil for power reception and communication and a wireless power transmission device (200), the method comprising the steps of:
transmitting, by the wireless power transmission device (200), a zero crossing interrupt signal related to wireless power to the small home appliance (100) when the wireless power transmission device (200) transmits the wireless power;
receiving, by the small home appliance (100), the zero crossing interrupt signal; and
determining, by the small home appliance (100), a communication period for communication by using the coil according to the zero crossing interrupt signal, and controlling a switch (140) located between the coil and a communication unit (120) of the small home appliance (100) according to the zero crossing interrupt signal,
wherein the small home appliance (100) is one of an electric kettle, a blender, and a toaster.

9. The method of claim 8, **characterized in that** the determining the communication period comprises:
generating, by the small home appliance (100), a communication control signal according to the zero crossing interrupt signal;
transmitting, by the small home appliance (100), the communication control signal to a communication unit (120) of the small home appliance (100); and
operating, by the communication unit (120) of the small home appliance (100), according to the communication control signal.

10. The method of claim 8, **characterized in that** the method further comprises:
detecting zero crossing of commercial power when the wireless power transmission device (200) transmits wireless power by using the commercial power, and
generating, by the wireless power transmission device (200), the zero crossing interrupt signal according to the detected zero crossing.

11. The method of claim 8, **characterized in that** the zero crossing interrupt signal is a square wave signal having a period of 8.3ms.

12. The method of claim 8, **characterized in that** the zero crossing interrupt signal has a pulse width of 2ms.

## Patentansprüche

1. Kleines Haushaltsgerät (100), das umfasst:
eine Spule für Leistungsempfang und ein Kommunikation; eine Kommunikationseinheit (120), die eine drahtlose Kommunikation mit einer drahtlosen Leistungsübertragungsvorrichtung (200) durch Verwenden der Spule ausführt; einen Schalter (140), der sich zwischen der Spule und der Kommunikationseinheit (120) befindet; und eine Steuereinheit (110), die eine drahtlose Leistung von der drahtlosen Leistungsübertragungsvorrichtung (200) durch Verwenden der Spule empfängt, ein Nulldurchgangsunterbrechungssignal bezüglich der drahtlosen Leistung von der drahtlosen Leistungsübertragungsvorrichtung (200) empfängt, den Schalter (140) gemäß dem Nulldurchgangsunterbrechungssignal steuert und eine Kommunikationsperiode für die Kommunikation durch Verwenden der Spule gemäß dem Nulldurchgangsunterbrechungssignal bestimmt,
wobei das kleine Haushaltsgerät (100) ein Wasserkocher oder eine Mixer oder ein Toaster ist.

2. Kleines Haushaltsgerät (100) nach Anspruch 1, **dadurch gekennzeichnet, dass** die Steuereinheit (110) ein Kommunikationssteuersignal gemäß dem Nulldurchgangsunterbrechungssignal erzeugt und das Kommunikationssteuersignal an die Kommunikationseinheit (120) sendet und die Kommunikationseinheit (120) gemäß dem Kommunikationssteuersignal arbeitet.

3. Kleines Haushaltsgerät (100) nach Anspruch 1, **dadurch gekennzeichnet, dass** die drahtlose Leistungsübertragungsvorrichtung (200) umfasst: eine Spule zur Leistungsübertragung, die ein zeitlich veränderliches elektromagnetisches Feld basierend auf einer Netzstromversorgung erzeugt, und eine weitere Steuereinheit (210), die das Nulldurchgangsunterbrechungssignal anhand eines detektierten Signals erzeugt.

4. Kleines Haushaltsgerät (100) nach Anspruch 3, **dadurch gekennzeichnet, dass** die drahtlose Leistungsübertragungsvorrichtung (200) ferner umfasst: eine Antenne zur Kommunikation und eine weitere Kommunikationseinheit (220), die mit der Kommunikationseinheit (120) durch die Antenne für eine Kommunikation kommuniziert.

5. Kleines Haushaltsgerät (100) nach Anspruch 4, **dadurch gekennzeichnet, dass** die drahtlose Leistungsübertragungsvorrichtung (200) ferner umfasst: einen Nulldurchgangsdetektor (250), der das detektierte Signal durch Detektieren eines Nulldurchgangs der Netzstromversorgung ausgibt.

6. Kleines Haushaltsgerät (100) nach Anspruch 1, **dadurch gekennzeichnet, dass** das Nulldurchgangsunterbrechungssignal eine Rechteckspannung mit einer Periode von 8,3 ms ist.

7. Kleines Haushaltsgerät (100) nach Anspruch 6, **dadurch gekennzeichnet, dass** das Nulldurchgangsunterbrechungssignal eine Impulsbreite von 2 ms aufweist.

8. Verfahren zum Ausführen einer Kommunikation zwischen einem kleinen Haushaltsgerät (100), das eine Spule für einen Leistungsempfang und eine Kommunikation und eine drahtlose Leistungsübertragungsvorrichtung (200) umfasst, wobei das Verfahren die folgenden Schritte umfasst:
Senden durch die drahtlose Leistungsübertragungsvorrichtung (200) eines Nulldurchgangsunterbrechungssignals bezüglich einer drahtlosen Leistung an das kleine Haushaltsgerät (100), wenn die drahtlose Leistungsübertragungsvorrichtung (200) die drahtlose Leistung überträgt,
Empfangen durch das kleine Haushaltsgerät (100) des Nulldurchgangsunterbrechungssignals; und
Bestimmen durch das kleine Haushaltsgerät (100) einer Kommunikationsperiode für die Kommunikation durch Verwenden der Spule gemäß dem Nulldurchgangsunterbrechungssignal und Steuern eines Schalters (140), der sich zwischen der Spule und einer Kommunikationseinheit (120) des kleinen Haushaltsgeräts (100) befindet, gemäß dem Nulldurchgangsunterbrechungssignal,
wobei das kleine Haushaltsgerät ein Wasserkocher oder ein Mixer oder ein Toaster ist.

9. Verfahren nach Anspruch 8, **dadurch gekennzeichnet, dass** das Bestimmen der Kommunikationsperiode umfasst:
Erzeugen durch das kleine Haushaltsgerät (100) eines Kommunikationssteuersignals gemäß dem Nulldurchgangsunterbrechungssignal;
Senden durch das kleine Haushaltsgerät (100) des Kommunikationssteuersignals an eine Kommunikationseinheit (120) des kleinen Haushaltsgeräts (100); und
Betreiben durch die Kommunikationseinheit (120) des kleinen Haushaltsgeräts (100) gemäß dem Kommunikationssteuersignal.

10. Verfahren nach Anspruch 8, **dadurch gekennzeichnet, dass** das Verfahren ferner umfasst:
Detektieren eines Nulldurchgangs einer Netzstromversorgung, wenn die drahtlose Übertragungsvorrichtung (200) drahtlose Leistung durch Verwenden der Netzstromversorgung überträgt, und
Erzeugen durch die drahtlose Leistungsübertragungsvorrichtung (200) des Nulldurchgangsunterbrechungssignals gemäß dem detektierten Nulldurchgang.

11. Verfahren nach Anspruch 8, **dadurch gekennzeichnet, dass** das Nulldurchgangsunterbrechungssignal eine Rechteckspannung mit einer Periode von 8,3 ms ist.

12. Verfahren nach Anspruch 8, **dadurch gekennzeichnet, dass** das Nulldurchgangsunterbrechungssignal eine Impulsbreite von 2 ms aufweist.

## Revendications

1. Petit appareil domestique (100) comportant :
une bobine pour la réception d'énergie et la communication ; une unité de communication (120) qui réalise une communication sans fil avec un dispositif de transmission d'énergie sans fil (200) en utilisant la bobine ; un commutateur (140) situé entre la bobine et l'unité de communication (120) ; et une commande (110) qui reçoit de l'énergie sans fil du dispositif de transmission d'énergie sans fil (200) en utilisant la bobine, reçoit un signal d'interruption de passage par zéro associé à l'énergie sans fil du dispositif d'énergie sans fil (200), commande le commutateur (140) en fonction du signal d'interruption de passage par zéro, et détermine une période de communication en utilisant la bobine en fonction du signal d'interruption de passage par zéro,
dans lequel le petit appareil domestique (100) est un élément parmi une bouilloire électrique, un mélangeur et un grille-pain.

2. Petit appareil domestique (100) selon la revendication 1, **caractérisé en ce que** la commande (110) génère un signal de commande de communication en fonction du signal d'interruption de passage par zéro et transmet le signal de commande de communication à l'unité de communication (120), et l'unité de communication (120) fonctionne en fonction du signal de commande de communication.

3. Petit appareil domestique (100) selon la revendication 1, **caractérisé en ce que** le dispositif de transmission d'énergie sans fil (200) comporte : une bobine de transmission d'énergie qui génère un champ électromagnétique variant dans le temps dû à un courant du réseau extérieur, et une autre commande (210) qui génère le signal d'interruption de passage par zéro sur la base d'un signal détecté.

4. Petit appareil domestique (100) selon la revendication 3, **caractérisé en ce que** le dispositif de transmission d'énergie sans fil (200) comporte en outre : une antenne de communication, et une autre unité de communication (220) qui communique avec l'unité de communication (120) via l'antenne de communication.

5. Petit appareil domestique (100) selon la revendication 4, **caractérisé en ce que** le dispositif de transmission d'énergie sans fil (200) comporte en outre : un détecteur de passage par zéro (250) qui délivre en sortie le signal détecté en détectant un passage par zéro du courant du réseau extérieur.

6. Petit appareil domestique (100) selon la revendication 1, **caractérisé en ce que** le signal d'interruption de passage par zéro est un signal d'onde carrée ayant une période de 8,3 ms.

7. Petit appareil domestique (100) selon la revendication 6, **caractérisé en ce que** le signal d'interruption de passage par zéro a une largeur d'impulsion de 2 ms.

8. Procédé pour réaliser une communication entre un petit appareil domestique (100) comportant une bobine pour la réception d'énergie et la communication et un dispositif de transmission d'énergie sans fil (200), le procédé comportant les étapes consistant à :
transmettre, par le dispositif de transmission d'énergie sans fil (200), un signal d'interruption de passage par zéro associé à l'énergie sans fil, au petit appareil domestique (100) lorsque le dispositif de transmission d'énergie sans fil (200) transmet l'énergie sans fil ;
recevoir, par le petit appareil domestique (100), le signal d'interruption de passage par zéro ; et
déterminer, par le petit appareil domestique (100), une période de communication pour la communication en utilisant la bobine en fonction du signal d'interruption de passage par zéro, et commander un commutateur (140) situé entre la bobine et une unité de communication (120) du petit appareil domestique (100) en fonction du signal d'interruption de passage par zéro,
dans lequel le petit appareil domestique (100) est un élément parmi une bouilloire électrique, un mélangeur et un grille-pain.

9. Procédé selon la revendication 8, **caractérisé en ce que** la détermination de la période de communication comporte les étapes consistant à :
générer, par le petit appareil domestique (100), un signal de commande de communication en fonction du signal d'interruption de passage par zéro ;
transmettre, par le petit appareil domestique (100), le signal de commande de communication à une unité de communication (120) du petit appareil domestique (100) ; et
faire fonctionner, par l'unité de communication (120), le petit appareil domestique (100), en fonction du signal de commande de communication.

10. Procédé selon la revendication 8, **caractérisé en ce que** le procédé comporte en outre les étapes consistant à :
détecter un passage par zéro du courant du réseau extérieur lorsque le dispositif de transmission d'énergie sans fil (200) transmet de l'énergie sans fil en utilisant le courant du réseau extérieur, et
générer, par le dispositif de transmission d'énergie sans fil (200), le signal d'interruption de passage par zéro en fonction du passage par zéro détecté.

11. Procédé selon la revendication 8, **caractérisé en ce que** le signal d'interruption de passage par zéro est un signal d'onde carrée ayant une période de 8,3 ms.

12. Procédé selon la revendication 8, **caractérisé en ce que** le signal d'interruption de passage par zéro a une largeur d'impulsion de 2 ms.
